# EUROPEAN PATENT SPECIFICATION

(11) **EP 0 594 417 B1**
(45) Date of publication and mention of the grant of the patent: **04.12.1996**
(21) Application number: 93308358.6
(22) Date of filing: 20.10.1993
(51) Int. Cl.: B62B 3/00, B65D 19/10

(54) **Goods container**
Warenbehälter
Récipient pour marchandises

(30) Priority: 20.10.1992 GB 9221971
(43) Date of publication of application: 27.04.1994
(73) Proprietor: ELOPAK SYSTEMS AG, CH-8152 Glattbrugg (CH)
(72) Inventor: Hagelberg, Harry, SF-00250 Helsinki (FI); Matoniemi, Markku, SF-04400 Jarvenpää (FI)
(74) Representative: Burrows, Anthony Gregory

(56) References cited:
- EP-A- 0 192 889
- AU-B- 620 166
- GB-A- J30 128
- US-A- 2 456 419

## Description

This invention relates to a goods container, for example a roll container for storing and transporting goods.

US-A-2456419 discloses a folding box intended to serve as, for example, a live bait box or a chicken coop, and comprising a substantially horizontal base, two vertical lateral walls, two vertical end walls and a substantially horizontal top. The four vertical walls are respective rectangular panels each consisting of wire mesh brazed to a rectangular wire frame. The base and the top each consist of two rectangular panels each again consisting of wire mesh brazed to a rectangular wire frame. The top panels are hinged to each other, and one of the top panels is hinged to its adjacent one of the lateral panels which is itself hinged to one of the base panels, which are hinged together and the other of which is hinged to the other lateral panel. All of these hinges are double hinges wherein hinge straps are bent around horizontal members of the wire frames. The end panels and a lid are hinged to the other lateral panel by single hinges in the form of wire hooks bent around vertical members and the top horizontal member of the wire frame of the other lateral panel. In each of the end panels the wire mesh is confined between two horizontal wires spaced vertically inwards from the two horizontal members of the wire frame of the lateral panel, so leaving two horizontal slots into which engage the ends of the top and base panels, which are longer than the lateral panels. Similarly, the wire mesh of the one lateral panel is confined between two vertical wires spaced horizontally inwards from the two vertical members of the wire frame of that panel, so leaving two vertical slots into each of which engage respective ends of the two horizontal wires of the adjacent end panel.

EP-A-192889 discloses a nestable roll container for storing and transporting goods and comprising a base upon which is mounted a rear pair of ground wheels, a rear vertical wall fixed to the base, two lateral vertical walls which are hinged at rear vertical edges to the respective vertical edges of the rear wall and upon which are mounted respective front castor ground wheels, a front vertical wall in the form of a latchable gate hinged to the front vertical edge of one of the lateral walls, and a plurality of pairs of shelves whereof the shelves of each pair are mounted upon the respective lateral walls so as to be upwardly turnable from horizontal, goods-bearing positions to vertical, nesting positions. The base comprises two wire mesh panels of which a forward panel is upwardly turnable. The four vertical walls each consist of a wire infill in a rectangular, tubular, metal frame.

EP-A-476970 discloses a somewhat similar roll container in two differing embodiments. In one embodiment, the gate is vertically displaceable between a condition in which horizontal bars thereof are at respective levels to retain milk cartons, for example, on the horizontal shelves into a condition in which the horizontal bars are at respective levels to allow the milk cartons to be loaded horizontally onto the shelves. The gate has fixed thereto at vertical intervals vertical hinge sleeves, whilst the lateral wall upon which the gate is mounted also has fixed thereto other vertical hinge sleeves and a long, vertical, hinge pin extends through all of the hinge sleeves. The other embodiment is similar, but the gate consists of an upper section and a lower section vertically displaceable relative to each other and to the rest of the roll container.

According to one aspect of the present invention, there is provided a goods container including a first wall including a hollow edge portion, a second wall having a second edge portion extending along said hollow edge portion, and a hinge device pivotally interconnecting said hollow edge portion and said second edge portion, said hinge device including a hinge pin extending along said hollow edge portion, characterized in that said hinge pin extends in said hollow edge portion.

In this way, the hinge pin is protected by the hollow edge portion against distortion or other damage.

The hinge pin may be fixed to a transverse connecting piece of the hinge device, which piece may extend through a transverse slot in the hollow edge portion. In that case, the hinge pin is turnable about its own axis relative to the hollow edge portion. Alternatively, the hinge pin may be fixed to the hollow edge portion, with the connecting piece being turnable relative to the hinge pin about the axis of the hinge pin.

If the hinge pin in the hollow edge portion is fixed against turning about its own axis relative to the connecting piece, this can be achieved by making the hinge pin of a rectangular (for example) cross-section and making an encircling barrel of the connecting piece of a corresponding internal cross-section. Alternatively, a transverse fixing member may extend through transverse holes in the barrel and the hinge pin.

The hinge device may be a double hinge, with the connecting piece being pivotally connected to a second hinge pin borne by the second edge portion, the two hinge pins being parallel to each other.

The advantage of arranging a double hinge in that manner is that, with one of the hinge pins being in the hollow edge portion, the maximum width of gap between the hollow edge portion and the second edge portion arising during turning of the walls relative to each other is reduced, compared to an arrangement in which the hinge pin in question is outside the hollow edge portion.

The arrangement is particularly applicable to hinging of a gate of the goods container to a lateral wall of the goods container, where a long hinge pin extending a major part of the height of the goods container serves as the common hinge pin for a plurality of such hinge devices at respective levels. By being contained within the hollow edge portion, such long hinge pin is very well protected against damage.

According to another aspect of the present invention, there is provided a goods container including a lateral wall comprised of a frame and an infill within the frame, the infill terminating short of a substantially vertical upper elongate portion of the frame, characterized in that the termination of the infill provides a hand-hole thereat.

This arrangement provides a convenient hand-hole for a man to use in seizing the goods container in the region of that upper elongate portion in order to move the goods container. This is particularly advantageous where the goods container may be used in a cold store, where the gloved hands of the operators can more readily seize that upper elongate portion if such hand-hole is provided. The infill may take the form of a wire mesh with some of the wires terminating short of that upper elongate portion. That portion may bend outwards, in such a manner as to form an outward bulge, thereby providing a larger hand-hole than would otherwise be the case and also providing a bumper to protect more delicate adjacent parts, for example hinges, against damage in collisions.

According to a third aspect of the present invention, there is provided a goods container comprising a base and first, second and third side walls arranged around said base with the first and third side walls facing each other and with the second side wall arranged transversely of the first and third side walls, characterized in that the first and third side walls are formed at respective upper portions of respective substantially vertical edges thereof with respective bulges which project into the plane of the second wall.

In this way, the first and third walls are supportable by the second wall against excessive inward bending of the first and third walls at the upper part of the container. These bulges may also act as bumpers to minimize damage to the second wall if and when the container collides with another goods container, for example.

In order that the invention may be clearly understood and readily carried into effect, reference will now be made, by way of example, to the accompanying drawings, in which:-
Figure 1 shows a perspective view of a roll container, and

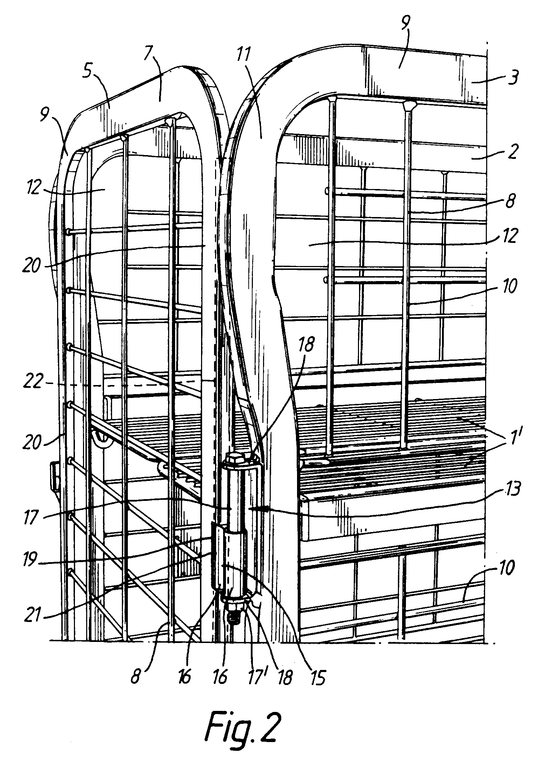

Figure 2 shows a detail of Figure 1.

Referring to the drawings, the roll container comprises a base 1, two lateral walls 2 and 3, a rear wall 4 in the form of a vertically liftable gate, a front wall 5 in the form of a horizontally turnable gate, and ground wheels 6. A plurality of laterally pivotally mounted half-shelves 1' can be lowered into the positions shown to sub-divide the interior of the roll container. Each of the walls 2, 3 and 5 consists of a rectangular or U-shaped frame, such as the U-shaped frame 7 of the front wall 5, and an infill, such as the infill 8 of the front wall 5, the infill being in the form of a wire mesh of vertical and horizontal wires. Each of the lateral walls 2 and 3 consists of a rectangular frame 9 with sections 10 of wire mesh infill. Each rectangular or U-shaped frame is of steel tube bent to the desired shape. The substantially vertical uppermost portion of the front tubular upright of the frame of each of the lateral walls 2 and 3 is bent forwards at 11 to form a forward bulge which projects through the plane of the front wall 5 and which constitutes a bumper to protect adjacent parts, particularly the gate 5, in collisions, especially with the rear of a preceding roll container. The bulges 11 also enable the gate 5 to support the lateral walls 2 and 3 against distortion by inward forces, since the bulges come to abut against the frame 7 in the event of excessive inward displacement of the upper parts of the lateral walls. The uppermost infill section 10 in each of the lateral walls 2 and 3 terminates short of its adjacent bulge 11, so as to leave hand-holes 12 to receive the operator's hands when he is pulling or pushing the roll container. The bulges 11 provide conveniently shaped handles for him to grasp.

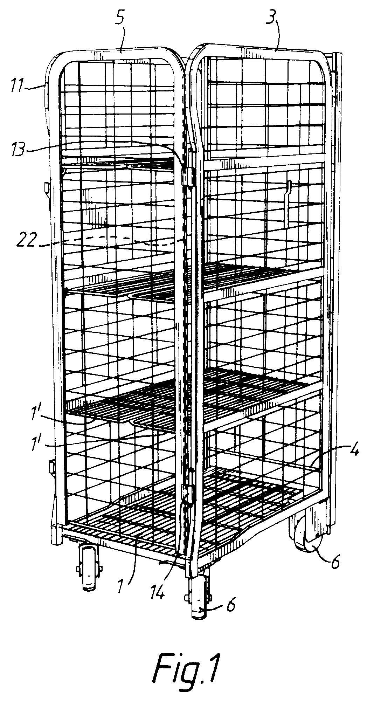

The front gate 5 is mounted on the lateral wall 3 by way of upper and lower hinge devices 13 and 14, of which particularly the upper device 13 is protected by the bulge 11 of the wall 3 against collision damage. Each hinge device comprises a transverse connecting piece 15 comprised of two barrels 16 extending vertically side-by-side. One of the barrels 16 encircles a bolt 17 of a vertical nut-and-bolt combination 17,17' which is tightened onto upper and lower horizontal lugs 18 through which the bolt 17 passes and which are welded to and project forwards from the front upright of the frame 9. The length of the bolt 17 and the vertical spacing between the lugs 18 is such that the connecting piece 15, and thus the gate 5, can be raised to a limited extent to latch and unlatch the gate 5 in either its fully closed position shown in Figure 1 or in its fully open position in which it is closely face-to-face with the wall 3. The other barrel 16 extends in a transverse slot 19 in the adjacent tubular upright 20 of the gate 5 and receives therein a vertical hinge pin 22, which extends most of the length of the upright 20. This hinge pin 22 also extends through the corresponding barrel 16 of the connecting piece 15 of the other hinge device 14. The transverse slot 19 can be formed by providing two horizontal cuts in the upright 20, these cuts being vertically spaced apart, and then pressing into the interior of the upright 20 the steel between the cuts. This is less weakening than cutting the steel away completely. A horizontal rivet 21 extending transversely through the hinge pin 22 and its encircling barrel 16 fixes the hinge pin 22 to the connecting piece 15.

Arranging the hinge pin 22 within the tubular upright 20 not only protects it against distortion or other damage, but also helps to minimize the gap between the upright 20 and the front upright of the frame 9.

## Claims

1. A goods container including a first wall (5) including a hollow edge portion (20), a second wall (3) having a second edge portion extending along said hollow edge portion (20), and a hinge device (13,22) pivotally interconnecting said hollow edge portion (20) and said second edge portion, said hinge device (13,22) including a hinge pin (22) extending along said hollow edge portion (20), characterized in that said hinge pin (22) extends in said hollow edge portion (20).

2. A container according to claim 1, wherein said hinge pin (22) is connected to a transverse connecting piece (15) of said hinge device (13,22), said connecting piece (15) extending through a transverse slot (19) in said hollow edge portion (20).

3. A container according to claim 2, wherein said transverse slot (19) is bounded by a pressed-in part of said hollow edge portion (20).

4. A container according to claim 2 or 3, wherein said hinge pin (22) is substantially fixed to said connecting piece (19) and is of a non-circular cross-section, and thereby engages with a non-circular cross-section of an encircling part (16) of said connecting piece (15).

5. A container according to any preceding claim, wherein said hinge (13,22) is a double hinge (13,22).

6. A container according to any preceding claim, wherein one of the first and second walls (5,3) is a lateral wall (3) comprised of a frame (9) and an infill (8) within the frame (9), the infill (8) terminating short of a substantially vertical upper elongate portion (11) of the frame (9) to provide a hand-hole (12) thereat.

7. A container according to claim 6, wherein said upper elongate portion (11) is in an outwardly bent condition so as to form an outward bulge (11).

8. A container according to any preceding claim and comprising a base (1) and first, second and third side walls (2,5,3) including said first wall (5) and said second wall (3) arranged around said base (1) with the first and third side walls (2,3) facing each other and with the second side wall (5) arranged transversely of the first and third side walls (2,3), the first and third side walls (2,3) being formed at respective upper portions (11) of respective substantially vertical edges thereof with respective bulges (11) which project into the plane of the second wall (5).

9. A container according to claim 8, wherein said hinge device (13,22) is in the region of one of said bulges (11).

10. A container including a lateral wall (3) comprised of a frame (9) and an infill (8) within the frame (9), the infill (8) terminating short of a substantially vertical upper elongate portion (11) of the frame (9), characterized in that the termination of the infill (8) provides a hand-hole (12) thereat.

11. A container according to claim 10, and further including a second lateral wall (2) arranged face-to-face with the first-mentioned lateral wall (3) and comprised of a second frame (9) and a second infill (8) within the frame (9), the second infill (8) terminating short of a substantially vertical upper elongate portion (11) of the second frame (9) to provide a second hand-hole (12) thereat.

12. A container according to claim 10 or 11, wherein the or each infill (8) takes the form of wire mesh.

13. A container according to claim 10, 11 or 12, wherein the or each upper elongate portion (11) is an outwardly bent condition so as to form an outward bulge (11).

14. A container comprising a base (1) and first, second and third side walls (2,5,3) arranged around said base (1) with the first and third side walls (2,3) facing each other and with the second side wall (5) arranged transversely of the first and third side walls (2,3), characterized in that the first and third side walls (2,3) are formed at respective upper portions (11) of respective substantially vertical edges thereof with respective bulges (11) which project into the plane of the second wall (5).

## Patentansprüche

1. Warenbehälter mit einer ersten Wand (5) mit einem hohlen Randteil (20), einer zweiten Wand (3) mit einem zweiten Randteil, der sich entlang des hohlen Randteils (20) erstreckt, und einer Scharniervorrichtung (13,22), die den hohlen Randteil (20) und den zweiten Randteil schwenkbar miteinander verbindet, wobei die Scharniervorrichtung (13,22) einen Scharnierstift (22) aufweist, der sich entlang des hohlen Randteiles (20) erstreckt, dadurch gekennzeichnet, daß der Scharnierstift (22) in dem hohlen Randteil (20) verläuft.

2. Behälter nach Anspruch 1, bei dem der Scharnierstift (22) mit einem Querverbindungsstück (15) der Scharniervorrichtung (13,22) verbunden ist, wobei das Verbindungsstück (15) sich durch einen Querschlitz (19) in dem hohlen Randteil (20) erstreckt.

3. Behälter nach Anspruch 2, bei dem der Querschlitz (19) durch einen eingedrückten Teil des hohlen Randteiles (20) begrenzt ist.

4. Behälter nach Anspruch 2 oder 3, bei dem der Scharnierstift (22) im wesentlichen an dem Verbindungsstück (19) fixiert ist und einen nicht-kreisförmigen Querschnitt hat und dadurch mit einem nicht-kreisförmigen Querschnitt eines Umfassungsteils (16) des Verbindungsstückes (15) zusammengreift.

5. Behälter nach einem der vorhergehenden Ansprüche, bei dem das Scharnier (13,22) ein Doppelscharnier (13,22) ist.

6. Behälter nach einem der vorhergehenden Ansprüche, bei dem eine der ersten und zweiten Wände (5,3) eine aus einem Rahmen (9) und einer Füllung (8) innerhalb des Rahmens (9) bestehende Seitenwand (3) ist, wobei die Füllung (8) kurz vor einem im wesentlichen vertikalen oberen langgestreckten Teil (11) des Rahmens (9) endet, um dort ein Handloch (12) zu bilden.

7. Behälter nach Anspruch 6, bei dem der obere langgestreckte Teil (11) im nach außen gebogenen Zustand ist, um eine nach außen gerichtete Ausbuchtung (11) zu bilden.

8. Behälter nach einem der vorhergehenden Ansprüche, und mit einer Basis (1) und einer ersten, einer zweiten und einer dritten Seitenwand (2,5,3) einschließlich der ersten Wand (5) und der zweiten Wand (3), die um die Basis (1) derart angeordnet sind, daß die erste und die dritte Seitenwand (2,3) einander zugewandt sind und die zweite Seitenwand (5) quer zur ersten und dritten Seitenwand (2,3) angeordnet ist, wobei die erste und die dritte Seitenwand (2,3) an jeweiligen oberen Teilen (11) ihrer jeweiligen, im wesentlichen vertikalen Ränder mit jeweiligen Ausbuchtungen (11) ausgebildet sind, welche in die Ebene der zweiten Wand (5) hineinragen.

9. Behälter nach Anspruch 8, bei dem die Scharniervorrichtung (13,22) im Bereich einer der Ausbuchtungen (11) ist.

10. Behälter mit einer Seitenwand (3) aus einem Rahmen (9) und einer Füllung (8) innerhalb des Rahmens (9), wobei die Füllung (8) kurz vor einem im wesentlichen vertikalen oberen langgestreckten Teil (11) des Rahmens (9) endet, dadurch gekennzeichnet, daß das Ende der Füllung (8) dort ein Handloch (12) bildet.

11. Behälter nach Anspruch 10 und ferner mit einer zweiten Seitenwand (2), die der erstgenannten Seitenwand (3) gegenüberliegend angeordnet ist und aus einem zweiten Rahmen (9) und einer zweiten Füllung (8) innerhalb des Rahmens (9) besteht, wobei die zweite Füllung (8) kurz vor einem im wesentlichen vertikalen oberen langgestreckten Teil (11) des zweiten Rahmens (9) endet, um dort ein zweites Handloch (12) zu bilden.

12. Behälter nach Anspruch 10 oder 11, bei dem die oder jede Füllung (8) die Form eines Drahtgitters hat.

13. Behälter nach Anspruch 10, 11 oder 12, bei dem der oder jeder obere langgestreckte Teil (11) im nach außen gebogenen Zustand ist, um eine nach außen gerichtete Ausbuchtung (11) zu bilden.

14. Behälter mit einer Basis (1) und einer ersten, zweiten und dritten Seitenwand (2,5,3), die um die Basis (1) angeordnet sind, wobei die erste und die dritte Seitenwand (2,3) einander zugewandt sind und die zweite Seitenwand (5) quer zur ersten und dritten Seitenwand (2,3) angeordnet ist, dadurch gekennzeichnet, daß die erste und die dritte Seitenwand (2,3) an jeweiligen oberen Teilen (11) ihrer jeweiligen, im wesentlichen vertikalen Ränder mit jeweiligen Ausbuchtungen (11) ausgebildet sind, welche in die Ebene der zweiten Wand (5) hineinragen.

## Revendications

1. Un récipient pour marchandises comportant une première paroi (5) comprenant une partie de bord évidée (20), une seconde paroi (3) présentant une seconde partie de bord s'étendant le long de ladite partie de bord évidée (20), et un dispositif d'articulation (13, 22) reliant entre eux de manière articulée ladite partie de bord évidée (20) et ladite seconde partie de bord, ledit dispositif d'articulation (13, 22) comportant une broche d'articulation (22) s'étendant le long de ladite partie de bord évidée (20), caractérisé en ce que ladite broche d'articulation (22) s'étend dans ladite partie de bord évidée (20).

2. Un récipient selon la revendication 1, dans lequel ladite broche d'articulation (22) est reliée à une pièce de liaison transversale (15) dudit dispositif d'articulation (13, 22), ladite pièce de liaison (15) s'étendant à travers une fente transversale (19) dans ladite partie de bord évidée (20).

3. Un récipient selon la revendication 2, dans lequel ladite fente transversale (19) est limitée par une partie de pression de ladite partie de bord évidée (20).

4. Un récipient selon la revendication 2 ou 3, dans lequel ladite broche d'articulation (22) est fixée sensiblement à ladite pièce de liaison (15) et est de section transversale non circulaire et, de ce fait, s'engage avec une section transversale non circulaire d'une partie encerclante (16) de ladite pièce de liaison (15).

5. Un récipient selon une revendication précédente quelconque, dans lequel ladite articulation (13, 22) est une articulation double (13, 22).

6. Un récipient selon une revendication précédente quelconque, dans lequel une des première et seconde parois (5, 3) est une paroi latérale (3) comprenant un cadre (9) et un remplissage (8) à l'intérieur du cadre (9), le remplissage (8) se terminant près d'une partie allongée supérieure sensiblement verticale (11) du cadre (9) pour créer à ce niveau un passage de main (12).

7. Un récipient selon la revendication 6, dans lequel ladite partie allongée supérieure (11) est dans une position courbée vers l'extérieur de manière à former un renflement dirigé vers l'extérieur (11).

8. Un récipient selon une revendication précédente quelconque et comprenant une partie inférieure (1) et des première, seconde et troisième parois latérales (2, 5, 3) comportant ladite première paroi (5) et ladite seconde paroi (3) disposées autour de ladite partie inférieure (1) avec les première et troisième parois latérales (2, 3) se faisant face l'une l'autre et avec la seconde paroi latérale (5) disposée transversalement à la première et troisième parois latérales (2, 3), les première et troisième parois latérales (2, 3) présentant, sur des parties supérieures respectives (11) des bords sensiblement verticaux respectifs de celles-ci, des renflements respectifs (11) qui font saillie dans le plan de la seconde paroi (5).

9. Un récipient selon la revendication 8, dans lequel ledit dispositif d'articulation (13, 22) est dans la zone d'un desdits renflements (11).

10. Un récipient comportant une paroi latérale (3) comprenant un cadre (9) et un remplissage (8) à l'intérieur du cadre (9), le remplissage (8) se terminant près d'une partie allongée supérieure sensiblement verticale (11) du cadre (9), caractérisé en ce que la fin du remplissage (8) forme à ce niveau un passage de main (12).

11. Un récipient selon la revendication 10, et comportant supplémentairement une seconde paroi latérale (2) disposée face à face avec la paroi latérale mentionnée en premier (3) et se composant d'un second cadre (9) et d'un second remplissage (8) à l'intérieur du cadre (9), le second remplissage (8) se terminant près d'une partie allongée supérieure sensiblement verticale (11) du second cadre (9) pour créer à ce niveau un second passage de main (12).

12. Un récipient selon la revendication 10 ou 11, dans lequel la ou chaque remplissage (8) prend la forme d'un treillis de tiges métalliques.

13. Un récipient selon la revendication 10, 11 ou 12, dans lequel la ou chaque partie allongée supérieure (11) est en position courbée dirigée vers l'extérieur de manière à former un renflement extérieur (11).

14. Un récipient comprenant une partie inférieure (1) et des première, seconde et troisième parois latérales (2, 5, 3) disposées autour de ladite partie inférieure (1) avec les première et troisième parois latérales (2, 3) se faisant face l'une l'autre et avec la seconde paroi latérales (5) disposée transversalement aux première et troisième parois latérales (2, 3), caractérisé en ce que les première et troisième parois latérales (2, 3) présentent, aux parties supérieures respectives (11) de leurs bords respectifs sensiblement verticaux, des renflements respectifs (11) qui font saillie dans le plan de la seconde paroi (5).
